# FASCICULE DE BREVET EUROPEEN

(11) **EP 2 701 147 B1**
(45) Date de publication et mention de la délivrance du brevet: **06.09.2017**
(21) Numéro de dépôt: 13190966.5
(22) Date de dépôt: 27.05.2011
(51) Int. Cl.: G11B 7/0045, G11B 7/005, G11B 7/013, G02B 21/00, G11B 7/1381, G02B 21/34, G11B 7/24088, G11B 7/0065, G11B 7/1267, G01N 21/64, G11B 7/00, G11B 7/246

(54) **Lame de calibration**
Kalibrierungslamelle
Calibration blade

(30) Priorité: 28.05.2010 FR 1054177
(43) Date de publication de la demande: 26.02.2014
(62) Demande divisionnaire de: 11726915.9
(73) Titulaire: Université de Bordeaux, 33000 Bordeaux (FR)
(72) Inventeur: Canioni, Lionel, Stéphane, 33170 GRADIGNAN (FR); Cardinal, Thierry, 33770 SALLES (FR); Bousquet, Bruno, 33170 GRADIGNAN (FR); Royon, Arnaud, 33820 SAINT-CIERS SUR GIRONDE (FR); Bellec, Matthieu, 33800 BORDEAUX (FR); Bourhis, Kevin, 33170 GRADIGNAN (FR); Papon, Gautier, 40800 AIRE-SUR-ADOUR (FR); Legros, Philippe, 33000 BORDEAUX (FR)
(74) Mandataire: Novagraaf Technologies

(56) Documents cités:
- EP-A1- 2 025 406
- WO-A1-00/31733
- WO-A1-03/048431
- WO-A1-2006/007766
- WO-A2-03/077240
- WO-A2-2004/034380
- US-A1- 2004 250 749
- US-A1- 2007 212 793
- US-B1- 6 807 138
- Bellec et al: "Beat the diffraction limit in 3D direct laser writing in photosensitive glass", Optics Express , vol. 17, no. 12 4 juin 2009 (2009-06-04), pages 10304-10318, XP002616389, USA Extrait de l'Internet: URL:http://www.opticsinfobase.org/abstract .cfm?URI=oe-17-12-10304 [extrait le 2011-01-11]
- CANIONI L ET AL: "Three-dimensional optical data storage using third-harmonic generation in silver zinc phosphate glass", OPTICS LETTERS, OSA, OPTICAL SOCIETY OF AMERICA, WASHINGTON, DC, US, vol. 33, no. 4, 15 février 2008 (2008-02-15), pages 360-362, XP001511611, ISSN: 0146-9592, DOI: DOI:10.1364/OL.33.000360
- SHIN J ET AL: "Formation and removal of multi-layered fluorescence patterns in gold-ion doped glass", APPLIED SURFACE SCIENCE, ELSEVIER, AMSTERDAM, NL, vol. 255, no. 24, 30 septembre 2009 (2009-09-30), pages 9754-9757, XP026675104, ISSN: 0169-4332, DOI: DOI:10.1016/J.APSUSC.2009.04.132 [extrait le 2009-04-23]
- Huang et al: "Three-dimensional optical storage by use of ultrafast laser", Proceedings of the SPIE - The International Society for Optical Engineering , vol. 5069, no. 1, 7973232, 16 septembre 2003 (2003-09-16), pages 264-268, XP002616390, USA DOI: 10.1117/12.533067 Extrait de l'Internet: URL:http://scitation.aip.org/getpdf/servle t/GetPDFServlet?filetype=pdf&id=PSISDG0050 69000001000264000001&idtype=cvips&doi=10.1 117/12.533067&prog=normal [extrait le 2011-01-11]
- BELLEC M ET AL: "Silver clusters as probes for femtosecond laser - glass interaction", LASERS AND ELECTRO-OPTICS, 2008. CLEO 2008. CONFERENCE ON, IEEE, PISCATAWAY, NJ, USA, 4 mai 2008 (2008-05-04), pages 1-2, XP031278585, ISBN: 978-1-55752-859-9
- MAUREL C ET AL: "Luminescence properties of silver zinc phosphate glasses following different irradiations", JOURNAL OF LUMINESCENCE, AMSTERDAM, NL, vol. 129, no. 12, 1 décembre 2009 (2009-12-01), pages 1514-1518, XP026755029, ISSN: 0022-2313, DOI: DOI:10.1016/J.JLUMIN.2008.12.023 [extrait le 2009-11-11]

## Description

La présente invention concerne une lame de calibration en trois dimensions pour système optique. Actuellement, des procédés de stockage de données essentiellement répandus sont spécialement adaptés à des supports tels que des disques CDs, DVDs ou de type Blu-ray. Le procédé d'écriture des données sur de tels supports peut être réalisé sur quelques couches superposées du disque en 2D.

Le support Blu-ray permet le plus important volume de stockage de données 2D, il est généralement proche ou légèrement supérieur à 50 Gbits. Cette capacité est de toute manière limitée en théorie à 100 Gbits.

La durée de vie généralement admise d'un tel support est d'une dizaine d'années. Une limitation est notamment due à la courte durée de vie de la couche en polymère.

Aujourd'hui, pour certains besoins de stockage, notamment d'archivage pérenne de données, la durée de vie et la capacité des supports sont trop faibles. Cette limitation entraine une multiplication des supports pour subvenir aux besoins d'archivage et de stockage.

De nouvelles techniques d'enregistrement 3D de données ont été développées notamment par absorption multi-photonique d'un matériau soumis à la forte intensité d'un faisceau laser.

Nous connaissons deux procédés d'écriture par enregistrement 3D dont un premier procédé d'enregistrement dit par « photochromisme » et un second procédé d'enregistrement dit par « fluorescence » sur des supports de type verre.

L'enregistrement par photochromisme induit notamment une transformation réversible du dopant incorporé dans un support transparent. Le dopant comprend deux états selon l'irradiation subie, chacun des états correspondant à une modification du coefficient d'absorption et de l'indice de réfraction du support. Ces deux états permettent de multiplexer différemment la lumière selon les caractéristiques de polarisation, de longueur d'onde et de phase. Ces caractéristiques peuvent être choisies de manière à utiliser les propriétés d'absorption et de réfraction modifiant les ondes réfléchies lors d'un éclairage pour la lecture de données et peuvent ainsi servir à décoder l'information lue.

Un problème de l'enregistrement par photochromisme est que la lecture de l'information par exemple en utilisant la polarisation est très difficile à maîtriser. En effet, la lumière d'éclairage du support est modifiée ou non selon l'indice de réfraction de la zone éclairée du support, mais il est très difficile de maîtriser la polarisation de la lumière sur des optiques grand public, ce qui conduit à mettre en oeuvre des correcteurs d'erreur. En outre, cette technique nécessite l'utilisation d'un laser accordable en écriture. De ce fait elle est difficile à mettre en oeuvre et elle coûte cher. Enfin le gain en ce qui concerne le stockage de données n'est pas suffisamment conséquent au vue de la mise en oeuvre d'une telle solution.

L'enregistrement par fluorescence n'a jamais été mis en oeuvre car la stabilisation des espèces fluorescentes dans un support transparent n'a jamais pu être réalisée. Cette limitation est due à la modification de l'intensité de fluorescence dans le temps notamment issue des lectures sur le support qui consistent en des éclairages successifs. L' enregistrement par fluorescence ne pouvait alors pas permettre une stabilité et une pérennité des informations codées.

De ce fait, ce type de technologie ne permettait pas jusqu'à présent d'irradier une zone d'un support transparent en vue de coder de l'information au niveau de la fluorescence des espèces photo-induites.

Par ailleurs, l'irradiation induit généralement une modification de l'indice de réfraction ce qui ne permet pas la lecture des données en 3D à cause de la diffusion de la lumière des zones irradiées.

La demande de brevet EP2025406A1 décrit un mécanisme pour transférer des lames sur lesquelles sont déposés des échantillons d'une unité de stockage à la platine pour un système à balayage laser.

La demande de brevet US20070212793A1 décrit une lame de verre dopée avec des ions fluorescents et une méthode d'utilisation de cette lame.

L'invention permet de pallier les inconvénients précités. L'invention concerne une lame de calibration en trois dimensions pour système optique comprend au moins un agrégat fluorescent stable dont l'intensité et le spectre permettent de définir les caractéristiques d'une mire de calibration permettant de contrôler au moins l'une des caractéristiques suivantes d'un système optique de mesure correspondant à des fonctions réponses d'un système optique :
- les niveaux d'intensité de fluorescence ;
- l'uniformité du champ de vue ;
- la réponse chromatique ;
- la fonction réponse temporelle à travers la calibration de la dynamique des capteurs.

Avantageusement, le système optique est un système parmi la liste suivante : microscope, détecteurs, sources lumineuses.

Avantageusement, la mire permet une calibration du système de positionnement de l'optique, du système optique.

Avantageusement, la mire permet une calibration de la résolution optique du système optique.

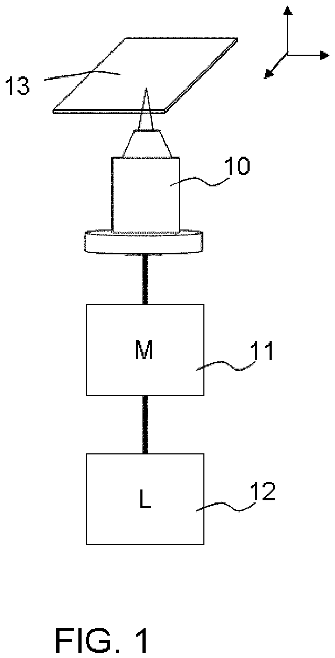

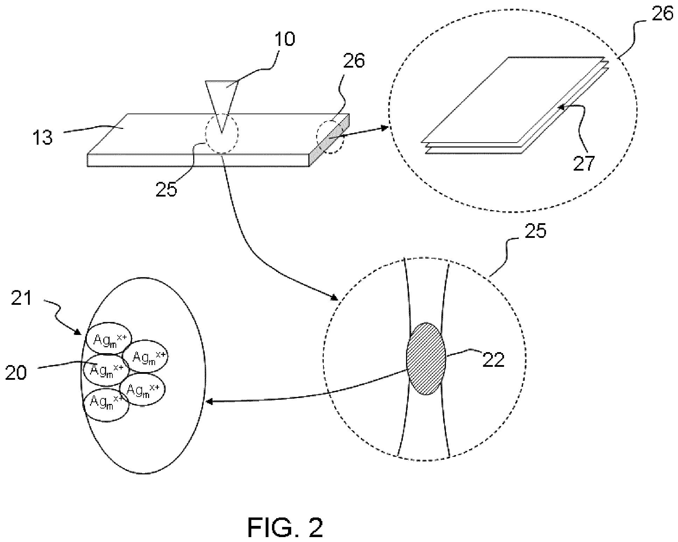

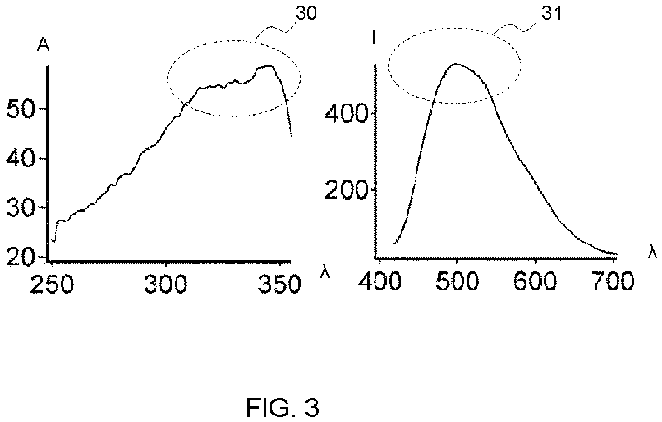

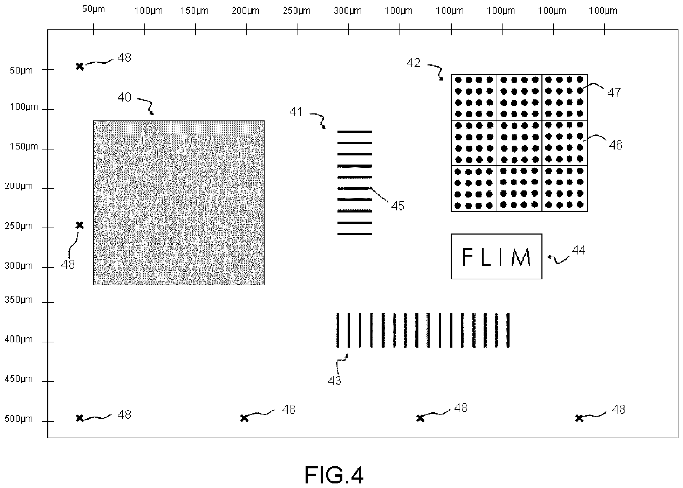

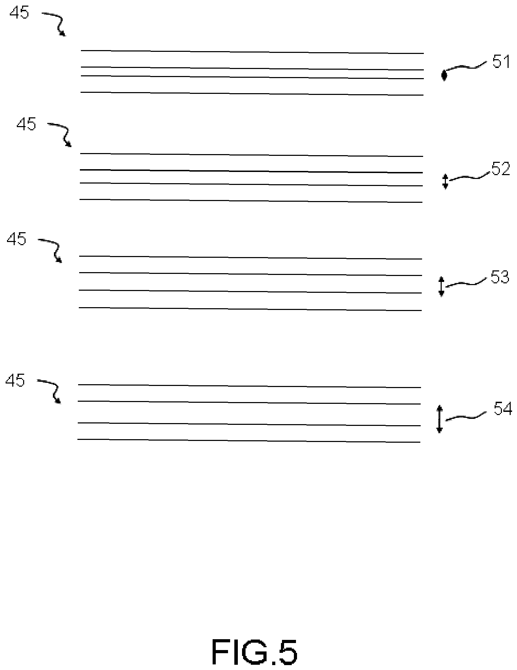

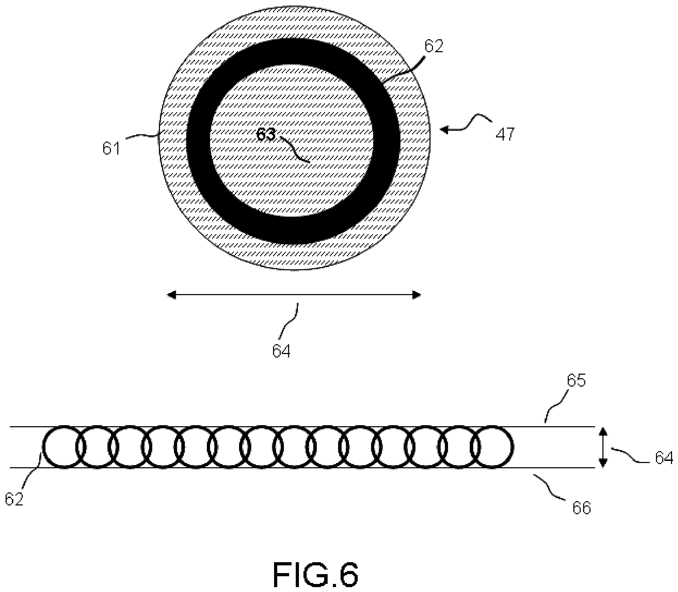

D'autres caractéristiques et avantages de l'invention seront présentés dans une description détaillée et illustrée par les figures suivantes : à l'aide de la description qui suit, faite en regard des dessins annexés qui représentent :
▪ figure 1 : un dispositif d'enregistrement de données ;
▪ figure 2 : la formation d'agrégats irradiés selon le procédé d'enregistrement ;
▪ figure 3 : les spectres d'absorption et d'émission d'une zone irradiée d'un support ;
▪ figure 4 : différents types de mires formées par des agrégats fluorescents de l'invention ;
▪ figure 5 : un zoom d'une mire formant des portions linéaires ;
▪ figure 6 : un zoom d'un agrégat fluorescent formé selon le procédé.

Les procédés qui sont décrits successivement, comprennent :
▪ un procédé d'enregistrement de données sur un support transparent dopé en vue de répondre à des besoins de grandes capacités de stockage et ;
▪ un procédé de lecture de données sur un tel support.

Les dispositifs qui sont décrits successivement concernent :
▪ un dispositif d'enregistrement de données sur un support transparent dopé en vue de répondre à des besoins de grandes capacités de stockage et ;
▪ un dispositif de lecture de données sur un tel support.
▪ un support transparent de stockage de données comportant des agrégats photo-induits stables, lesdits agrégats d'une zone prédéterminée formant un émetteur fluorescent dont le spectre et l'intensité correspondent à une signature.

Le procédé d'enregistrement de données permet d'enregistrer des données sur un support formé d'un matériau photosensible transparent comportant au moins un dopant.

Le procédé d'enregistrement comporte une première étape de calibration :
▪ de la fluence d'une source de lumière pulsée, la fluence étant la densité surfacique d'énergie émise ;
▪ de la cadence des impulsions et ;
▪ du nombre d'impulsions émises dans la zone irradiée.

En outre, le procédé d'enregistrement comporte une étape d'irradiation d'une zone du support. Dans cette étape, la fluence de chaque impulsion, le nombre d'impulsions et la cadence des impulsions sont adaptées à irradier dans ladite zone une partie du matériau de manière à former des agrégats stabilisés à partir du dopant tout en minimisant la modification de l'indice de réfraction du support.

La cadence des impulsions émises est une donnée de configuration du laser également appelé taux de répétition du laser.

Le procédé d'enregistrement peut comporter en outre une étape de réitération des deux premières étapes sur un ensemble de zones du support. Un avantage est que les zones peuvent être situées à différentes profondeurs et de ce fait le procédé d'enregistrement de données est un procédé 3D qui permet d'augmenter significativement la capacité de stockage du support.

La figure 1 représente des moyens permettant de mettre en oeuvre le procédé d'enregistrement de données, notamment :
▪ un laser 12, noté L permettant de générer un faisceau laser sur une zone d'interaction d'un support transparent 13 dopée avec des ions métalliques ;
▪ un modulateur 11 acousto-optique, noté M, permettant de faire varier le taux de répétition du laser ou le nombre d'impulsions par zone d'interaction du support 13 ;
▪ un objectif 10 de microscope permettant de focaliser le faisceau laser dans la zone d'interaction souhaité du support 13.

La fonction de l'objectif de microscope peut être réalisée par tout moyen d'un élément focalisant comme un objectif de microscope ou une lentille.

Dans un mode de réalisation,
▪ le support transparent est un verre photosensible dopé avec des ions argent ;
▪ le laser est un laser femtoseconde émettant dans l'infrarouge à une énergie telle qu'au point focal une fluence proche de 1 J.cm⁻² par impulsion est générée.

Dans un autre mode de réalisation, le laser est un laser picoseconde. Le procédé peut-être mise en oeuvre dès lors que la durée de l'impulsion est inférieure ou égale à une picoseconde.

La longueur d'onde du laser et la longueur d'onde de coupure du verre, longueur d'onde à partir de laquelle le verre absorbe la lumière, étant choisies de manière à ce que la longueur d'onde du laser soit bien plus grande que la longueur d'onde de coupure du verre, c'est-à-dire au moins deux fois plus grande.

Par exemple, la longueur d'onde du laser peut être choisie proche de 1030 nm pour une longueur d'onde de coupure du verre sensiblement proche de 270 nm.

Le procédé d'enregistrement de données comprend une configuration telle que le taux de répétition du laser soit une valeur supérieure à 1 kHz et de manière plus avantageuse supérieure à 10kHz. En effet au-delà de cette fréquence le matériau n'a plus le temps de refroidir entre deux impulsions et les effets thermiques sont plus favorables à la formation d'agrégats. Cette configuration peut être obtenue à partir d'un dispositif de modulation de la lumière tel qu'un modulateur acousto-optique 11.

Un mode préférentiel permet de régler la valeur du taux de répétition à une valeur sensiblement proche de 10 MHz. Cette configuration permet, lorsque le procédé d'enregistrement de données de l'invention est exécuté, de stabiliser les particules irradiées du matériau du support.

La photo-sensibilisation du verre est un phénomène non-linéaire provoqué par l'absorption multi-photonique du matériau qui permet de former des agrégats de particules irradiées, appelés espèces.

Au voisinage du col du faisceau focalisé par l'objectif de microscope 10, la fluence est suffisante pour créer une image, qu'on appelle « image latente ». Contrairement aux autres techniques d'irradiation telles que celles obtenues à partir d'émissions d'UV, de rayons X, de rayons Gamma, ou encore par émission de faisceaux d'électrons, l'énergie du laser est déposée dans le matériau plus rapidement que le temps caractéristique de thermalisation des particules irradiées.

Cette caractéristique propre à la configuration du procédé d'enregistrement permet de stabiliser les espèces.

La figure 2 représente une optique de microscope 10 qui permet de focaliser le laser dans une zone d'interaction 25 du support 13. Dans l'exemple de la figure 3, les agrégats 21 qui se forment dans le col 22 du faisceau à une profondeur donnée du matériau du support sont des particules 20 irradiées d'Argent Agₘ^{x+}. Les particules irradiées qui se forment sont stabilisés dans le matériau.

Les agrégats formés dans une zone irradiée définissent un émetteur fluorescent dont le spectre et l'intensité de fluorescence permettent de définir une signature.

Le procédé d'enregistrement permet à partir de l'étape de calibration de définir les paramètres d'irradiation tels que notamment la fluence, le nombre d'impulsions et le taux de répétition du laser. A partir des paramètres d'irradiation, le procédé d'enregistrement permet à partir d'un certain nombre d'impulsions laser de créer un émetteur fluorescent dans une zone d'interaction. L'émetteur est défini par un spectre et une intensité de fluorescence propre à la zone irradiée définissant ainsi une signature de la zone irradiée.

Notamment, l'étape d'irradiation comporte un ensemble d'impulsions sur une même zone du support de manière à former des agrégats irradiés stables dans ladite zone.

Lorsque les agrégats sont éclairés, ils émettent à leur tour une lumière fluorescente. L'intensité lumineuse fluorescente émise par les agrégats correspond à une signature qui peut notamment être lue par l'interprétation du spectre réémis à partir d'un procédé de lecture de données de l'invention décrit ci-après.

En conséquence, la configuration de l'irradiation dont la fluence, le nombre d'impulsions et la cadence des impulsions, d'une zone donnée du support définit un niveau de gris correspondant à un niveau de fluorescence des agrégats formés dans ladite zone lorsqu'ils émettent à leur tour une luminescence.

Un mode de réalisation du dispositif d'enregistrement de données comprend un laser femtoseconde émettant un faisceau pulsé destiné à irradier une zone du support, la cadence des impulsions, également appelé taux de répétition, étant réalisée au moyen d'un modulateur acousto-optique.

L'irradiation est préférentiellement réalisée au moyen d'un objectif de microscope permettant de focaliser la lumière laser localement sur une zone du support. L'impulsion laser transmet une énergie au support ionisant le dopant dans une zone proche du point focal du microscope.

Le dispositif d'enregistrement comporte en outre des moyens moteurs permettent de déplacer le support par rapport à la source lumineuse de manière à réitérer successivement l'étape d'irradiation du procédé d'enregistrement sur un ensemble de zones du support en adaptant la fluence, le nombre d'impulsions et la cadence des impulsions à chaque zone irradiée.

Les zones peuvent par exemple être organisées par couche dans le matériau lorsqu'elles sont situées à une même profondeur. Avantageusement, le support peut comprendre une pluralité de couches superposées.

La figure 2 représente un échantillon 26 du support dans lequel plusieurs couches 27 peuvent être superposées de manière à organiser l'enregistrement des données par strate dans le support. Le procédé de lecture de l'information est alors mis en oeuvre par une succession d'opérations de lecture d'une zone dans une même couche et d'une couche à une autre couche.

Le modulateur acousto-optique permet aussi bien de faire varier le taux de répétition du laser ou le nombre d'impulsions par zone d'interaction.

Dans un mode privilégié de configuration du dispositif, l'objectif de microscope focalise le faisceau laser avec une ouverture numérique de 0,52, ce qui correspond à une tache focale de 2 µm de diamètre. La platine motorisée sur 3 axes permet de positionner le col du faisceau dans une zone d'irradiation, formant un échantillon de matériau défini en volume, l'irradiation se faisant avec une précision de 50 nm sur le volume irradié.

Après irradiation suivant le procédé d'enregistrement, le verre est modifié et comporte une image dite latente car elle n'est visible que par microscopie de fluorescence, sans modification d'indice apparente.

L'intensité de fluorescence des agrégats dépend notamment d'une part de l'intensité du faisceau laser incident et d'autre part du nombre d'impulsions.

La figure 3 représente un premier graphique représentant le spectre d'absorption A(λ) de la zone irradiée, où A représente l'absorption et λ la longueur d'onde.

La figure 3 représente un second graphique représentant le spectre d'émission I(λ) d'une zone irradiée du verre, où I représente l'intensité émise par les agrégats éclairés.

Le procédé permet de former un support dans lequel le matériau est modifié, l'irradiation laser impulsionnelle ayant créé de petits agrégats stabilisés formant une image latente.

Dans un mode privilégié, les agrégats sont des agrégats d'argent de type Agₘ^{x+} avec m < 8 et x < 2.

Dans d'autres modes de réalisation, les agrégats métalliques sont des agrégats d'or ou de cuivre. Dans un mode particulier de réalisation le matériau comprend des ions de différentes natures telles que l'or, le cuivre ou l'argent en quantités différentes ou égales.

Le spectre d'absorption du premier graphique présente notamment une première zone 30 d'absorption centrée entre 320 nm et 400 nm.

Le spectre d'émission du second graphique présente une bande centrée à 500 nm. La fluorescence des espèces irradiées permet de définir une signature. Ces espèces présentent des absorptions entre 300 et 400 nm et une émission large bande dans le visible de type émission blanche.

La durée de vie de la fluorescence est de l'ordre de 3 nanosecondes. La fluorescence blanche est intense et peut-être dans certains cas observée à l'oeil nu.

L'irradiation laser impulsionnelle comme les autres types d'irradiation permet de créer dans le verre photosensible de petits agrégats métalliques. Dans le cas du laser femtoseconde, pour de grandes récurrences par exemple au-delà de 10 kHz, l'élévation de température dans le verre est supérieure à 300°C. Cette température est suffisante pour que le processus de diffusion de l'argent démarre. Une température élevée proche de 350°C dans la zone d'irradiation contribue à obtenir de bonnes conditions de stabilisation des espèces.

Les agrégats qui se forment résultant de l'irradiation permettent de stabiliser les atomes neutres d'argent Ag⁰ en dehors de leur équilibre thermodynamique.

Le procédé permet de générer une intensité du laser femtoseconde telle qu'au centre du col du faisceau, les agrégats ne peuvent pas perdurer car ils sont photo-dissociés par effet multi-photonique.

Le procédé de l'invention permet donc de forcer la diffusion de l'agent photosensible du centre du faisceau laser vers la périphérie où l'intensité n'est pas suffisante pour dissocier les agrégats.

Le procédé d'enregistrement de l'invention permet de stopper la diffusion en périphérie de la zone irradiée car les espèces chimiques d'Argent Agₘ^{x+} créées stabilisent ladite zone.

Ces agrégats ne diffusent pratiquement pas du fait de leur taille. Finalement, avec le procédé d'enregistrement, une image latente au foyer du faisceau est créée. Cette image est effacée au centre en même temps qu'elle est créée. Seule une image en périphérie de la zone perdure et s'intensifie avec le temps de pose par diffusion.

Un mode de réalisation permet d'enregistrer des informations sur le support par irradiation de zones situées à une même profondeur du matériau. Ces dernières forment alors une couche dans le matériau.

Le procédé permet alors d'enregistrer dans le matériau des informations à différentes profondeurs de sorte que différentes couches comprenant des données peuvent être superposées, l'irradiation d'une zone d'une couche n'ayant pas d'influence sur les zones de couches superposées lorsque celles-ci sont séparées de quelques micromètres.

Un exemple de réalisation est obtenu par réitération du procédé dans différentes zones, par exemple choisies de manière adjacentes et consécutives dans le matériau à une même profondeur. L'intensité du faisceau laser émis est prise constante à 20×10¹² W.cm⁻² et un nombre d'impulsions est émis de manière croissant d'une première zone jusqu'à une dernière zone de 10² à 10⁷ impulsions par zone irradiée.

Dans ce cas de réalisation, le procédé permet de créer des zones comportant chacune un niveau de gris parmi 256 niveaux de gris, le niveau de gris étant mesuré après éclairage des zones, lors d'une réémission d'une intensité fluorescente des agrégats contenus dans chaque zone.

Un avantage du procédé d'enregistrement est que les spectres d'émission ainsi que l'intensité de fluorescence des agrégats ne varient pas après exposition sous faisceau laser violet avec une puissance lumineuse de 150 mW et une longueur d'onde de 405 nm pendant des millions de cycles de lecture.

Par ailleurs, il n'y a pas de dégradation notable des propriétés de fluorescence même jusqu'à une température de 350°C. Enfin, le support vitreux présente une tenue au temps, de l'ordre de plusieurs milliers d'années, très supérieure aux autres supports actuellement disponibles qui ont une tenue au temps de l'ordre de quelques dizaines d'années.

L'invention concerne également un support transparent destinée au stockage de données et un procédé de lecture de données dudit support.

Le support transparent est formé d'un matériau modifié. Le support comporte au moins une image latente formée par un ensemble d'agrégats répartis localement dans le volume du support et stabilisés d'ions métalliques. Chacun des agrégats se comporte comme une source émettrice fluorescente, l'ensemble des agrégats d'une même zone étant appelé émetteur, lorsque la zone est excitée par une source lumineuse adéquate.

Le procédé de lecture des données comprend :
▪ une étape d'éclairage par une seconde source de lumière focalisée en dans une zone du support pendant une première durée (t₁) et ;
▪ une seconde étape de capture de l'intensité lumineuse réémise par l'émetteur pendant une seconde durée (t₂).

La seconde durée t2 peut être dans un mode de réalisation sensiblement du même ordre de grandeur que la durée de vie de la fluorescence de l'émetteur.

Le procédé comporte éventuellement une troisième étape de filtrage de la lumière excitatrice violette de la lumière fluorescente réémise par les émetteurs. Le filtrage de la lumière violette permet de capturer uniquement la lumière fluorescente visible par le dispositif de lecture détaillé ci-après.

Lorsque le support comporte plusieurs couches superposées, la première étape peut être réalisée au moyen d'un filtrage confocal permettant de focaliser la lumière émise par la seconde source à la profondeur d'une des couches.

Un avantage du procédé de lecture est qu'il ne nécessite pas de changement de technologie radical par rapport aux procédés actuellement utilisés. Par exemple, la technologie actuelle Blu-ray peut être adaptée notamment en ce qui concerne la longueur d'onde d'émission de la seconde source de lumière.

Une longueur d'onde d'émission de la seconde source proche de 405 nm est compatible avec la bande d'excitation des espèces photo-induites dans le procédé de lecture. L'ouverture numérique de la lentille, par exemple avec une ouverture de 0,85, est suffisante pour pouvoir discriminer des couches séparées de quelques micromètres. La forte intensité du signal ne nécessite pas de changement de capteur.

Le procédé de lecture des données comporte avantageusement une quatrième étape de conversion analogique/ numérique permettant de discriminer un niveau d'intensité lumineuse de fluorescence de manière à former un mot de données correspondant.

Un avantage de la discrimination d'un niveau de gris numérisé est de pouvoir coder l'information sur plusieurs niveaux multipliant ainsi la quantité d'information contenu dans le support.

Enfin, dans le mode de réalisation dans lequel le support comprend une pluralité de couches superposées, il est possible lors du procédé de lecture de données d'utiliser un filtrage confocal pour limiter les interactions inter-couches. Ce phénomène est également appelée « cross-talk » dans la terminologie anglo-saxonne.

L'invention concerne un dispositif de lecture de données.

Préférentiellement, le dispositif de lecture de données comprend une diode laser éclairant dans la gamme [330nm ; 450nm] une zone comportant des agrégats fluorescents stabilisés dans un support. L'ensemble des agrégats d'une même zone définit un émetteur fluorescent. En outre, le dispositif de lecture comporte des moyens pour capturer l'intensité lumineuse émise par fluorescence par un émetteur et des moyens pour convertir la luminescence ou la fluorescence en un signal numérique de manière à former un mot de données correspondant au spectre et à l'intensité de l'émetteur.

Enfin, le dispositif de lecture comprend des moyens moteurs permettant de déplacer le support par rapport à la source lumineuse de manière à réitérer successivement les étapes du procédé de lecture sur un ensemble de zones d'au moins une couche du support et avantageusement sur différentes couches du support.

Dans d'autres modes de réalisation, il est également possible d'utiliser des diodes laser ayant une longueur d'onde plus courte que 405 nm et des lentilles permettant une ouverture numérique importante de manière à améliorer les performances de lecture des données sur le support.

Un avantage du dispositif et du procédé de lecture des données est que la vitesse de lecture est limitée par la durée de vie de la fluorescence, soit 500 Mbits.s⁻¹.

Enfin, l'utilisation d'un support vitreux permet d'obtenir des supports pérennes pour des durées de plusieurs dizaines d'années. Notamment, l'utilisation d'un verre est beaucoup plus performante en stabilité qu'un polymère notamment dopé avec un colorant organique qui présente de faibles propriétés de stabilité liées au photo-blanchiment. Cet inconvénient limite la bonne conservation des données enregistrées.

Le verre est inapproprié à être utilisé avec un colorant organique, notamment car ce dernier ne peut être utilisé comme dopant avec le verre.

Une variante de l'invention est l'utilisation d'un support de type polymère avec par exemple des ions d'argent.

Selon le procédé d'enregistrement, des agrégats d'argent se forment, mais ces derniers seront moins stables dans le temps qu'avec l'utilisation d'un support de type verre. Le stockage de données est moins pérenne.

Le support de type verre présente de réels avantages quant au gain de stabilité et de pérennité du support, car la stabilité des émetteurs est assurée par la matrice vitreuse, ce qui ne peut être le cas dans les polymères.

Une application de l'invention notamment d'un support de l'invention est de permettre de fabriquer une lame de calibration pour microscopie de fluorescence. Par exemple, les différentes plateformes de microscopie optiques ont besoin pour étalonner et déconvoluer leurs images prises par microscopie confocale à balayage laser de mires de calibration permettant de déterminer parfaitement la fonction réponse de leur système optique en 3D. Les plateformes ont également besoin d'objets fluorescents de référence stables dans le temps. En effet, la réponse des photo-détecteurs, le désalignement des instruments, le photo-blanchiment des espèces fluorescentes engendrent des difficultés de comparaison d'images prises à des endroits et des moments distincts.

En outre, l'invention peut être adaptée à la mesure d'un courant électrique. Notamment, la stabilité des centres fluorescents à haute température permet d'envisager des applications pour des électrodes de patch fluorescentes. Par exemple, en neurobiologie lorsqu'un courant électrique circule entre deux électrodes composées d'agrégats d'argent implantées sur un système biologique, ces derniers émettent de la lumière fluorescente dont l'intensité dépend du courant électrique. On peut donc mesurer des courants électriques (ou différences de potentiel) très faibles grâce à ce type d'électrodes.

Dans ce dernier mode d'application, avantageusement le support est par exemple une électrode.

Une autre application de l'invention permet d'appliquer le procédé d'enregistrement de l'invention à la gravure d'une signature d'un support de type verre. Avantageusement le procédé peut être appliqué à la lutte contre la contrefaçon.

L'inscription laser dans le verre n'est pas visible à l'oeil, mais seulement quand elle est excitée avec une diode laser bleue sous forme de fluorescence.

Le procédé permet d'enregistrer sur un support des inscriptions sous forme de « datamatrix », appellation anglo-saxonne générique aux codes de type code barre. Un avantage est quelle permet un enregistrement de données à haute densité.

Le code « datamatrix » est une symbologie bidimensionnelle à haute densité permettant de représenter une quantité importante d'informations sur une surface réduite, jusqu'à 2 335 caractères alphanumériques ou 3 116 caractères numériques, sur environ 1 cm².
Un autre avantage du code « datamatrix » est qu'il est dans le domaine public et est libre de droit. En outre, il répond à la norme IEC16022.

Typiquement, cette signature dans des verres incorporés à des objets permet de les identifier simplement tout en conservant un aspect extérieur visible sans trace d'inscription de données.
Le procédé peut donc s'appliquer à tout type d'objet comprenant une partie en verre. Notamment, il est avantageux de réaliser une telle gravure sur des objets de luxe tel qu'une montre, une bouteille ou encore une paire de lunettes.

Dans ce dernier cas, le lecteur permettant d'identifier le code « datamatrix » est un dispositif de lecture telle que défini ci-dessus. Il peut être embarqué et miniaturisé de manière à pouvoir être transporté simplement. Le procédé de lecture permet de décoder l'inscription sur le support de l'invention.

Une autre application est la fabrication d'un support de type disque analogique optique. Ce dernier peut avantageusement être similaire aux disques vinyles. Le dispositif de lecture permet de remplacer avantageusement la pointe en diamant usuellement utilisé lors de la lecture d'un disque vinyle par un laser UV, sur des pistes fluorescentes, et dont l'intensité de fluorescence correspond à un niveau analogique.

Enfin une application de l'invention permet de fabriquer des éclairages fluorescents. Dans ce cas, le support est un émetteur fluorescent. En excitant les émetteurs composés d'agrégats d'argent avec un courant électrique, ces derniers émettent de la fluorescence, de la même manière que des diodes électroluminescentes.

Selon un mode particulièrement avantageux, un pourcentage de dopant dans le verre est supérieur à 4%. Cette proportion permet une configuration optimale, notamment de manière à augmenter la stabilité des agrégats dans le verre.

La stabilité des agrégats est également améliorée lorsque les pulses du laser ont une intensité lumineuse configurée entre 1 et 5 J/cm². Le nombre de pulses est également avantageusement adapté pour obtenir une température locale lors du processus d'écriture, la température avoisinant les 300°C, typiquement >100°C.

Lors de l'application de l'invention à la fabrication de lames de calibration pour microscope tel que mentionné précédemment, différents modes de réalisation peuvent être mis en oeuvre.

Notamment, selon les modes de réalisation qui peuvent être combinés, des agrégats fluorescents peuvent être crées et agencés dans une lame de calibration de manière à former des mires ayant des propriétés particulières. Selon les configurations, les mires permettent de calibrer l'homogénéité du champ, la résolution latérale, la réponse des détecteurs, la durée de vie de la fluorescence, le repositionnement des platines, la profondeur de champ ou encore la résolution longitudinale et axiale, la stabilité des laser.

La figure 4 représente une lame de calibration comprenant différents agencements d'agrégats permettant de calibrer le microscope. On nomme un agencement donné d'agrégats une « mire ». Cette dernière forme un motif en 2D ou 3D gravé à une profondeur donnée ou à différentes profondeurs de la lame. L'inscription est effectuée à l'aide du procédé de manière à ce que les agrégats forment un mot de données. Pour une utilisation dans une lame de calibration un mot de données peut correspondre à une intensité de fluorescence donnée. Un mots de données est par exemple codé en fonction du niveau de luminescence réémis après un éclairement de l'agrégat.

Dans un support de type verre, l'avantage de la formation des agrégats fluorescents est qu'ils restent stables dans le temps. Un mot de données formé par un agrégat fluorescent n'est pas modifié par photo blanchiment ou tout autre phénomène pouvant altérer les propriétés d'un agrégat. Notamment, le procédé permet une non altération des agrégats qui sont directement formés et piégés dans le support. La stabilité des agrégats permet de réaliser des lames de calibration pour microscope à fluorescence fiables et permet d'obtenir un haut niveau de précision des calibrations.

La figure 4 représente une première mire 40 uniforme. A cet effet, le procédé d'enregistrement de données de l'invention permet de graver uniformément sur tout le champ des agrégats ayant les mêmes propriétés et étant équirépartis sur une surface donnée et à une profondeur donnée de la lame. Cette mire permet de calibrer l'homogénéisation d'un champ lors de la calibration d'un microscope.

Un second exemple de mire 41 est représenté à la figure 4. Les mires 41 permettent de calibrer la résolution optique des objectifs des microscopes. La mire 41 comprend une série de sections linéaires 45 horizontales gravées en 3D dans un support de type verre selon le procédé. Chaque section linéaire 45 apparente de la mire 41 comprend quatre lignes dont l'espacement est très faible et est de l'ordre de grandeur de la largeur des lignes. Certaines des sections linéaires de la mire 41 sont représentées à la figure 5. La figure 5 est un zoom d'une partie de la mire 41.

Tout d'abord, considérons la forme d'un agrégat gravé selon le procédé. Un agrégat gravé selon le procédé de l'invention forme une sorte d'anneau 62 représenté à la figure 6 ayant un diamètre de l'ordre de 1,6µm. En 3D, il s'agit d'une structure tubulaire. L'analyse de la dispersion et du bruit de lecture d'enregistrement permet d'afficher une courbe de niveau d'intensité permettant de coder différentes valeurs. Il est possible par exemple de coder les agrégats de manières à obtenir 16 niveaux de valeurs correspondant à 16 intensités fluorescentes données. Ces niveaux peuvent être obtenus en augmentant le nombre de pulses d'un laser dont l'intensité est de l'ordre de 5J/cm² lors du procédé d'enregistrement de données. Ainsi une image peut également être codée de cette manière où chaque pixel est enregistré dans le volume sous forme d'un tube fluorescent.

La zone proche de l'anneau comprend une partie centrale 63 et une partie extérieure 61 un peu moins irradiées que la partie formant l'anneau. Lors de la gravure d'une mire 41, c'est-à-dire lors de la mise en oeuvre du procédé d'enregistrement pour la réalisation de sections linéaires, les agrégats sont gravés pour former une trace linéaire horizontale qui permettra de calibrer la résolution optique d'un microscope. Il apparait, en réalité, dans le support deux lignes 65, 66 représentées à la figure 6 qui correspondent à la trace d'un anneau dont le procédé d'enregistrement a été réitéré en suivant une droite horizontale. La trace linéaire comprend deux lignes espacées du diamètre de l'anneau de l'ordre de 1,6µm.

La figure 5 représente une première section linéaire 45 comprenant deux traces linéaires formant chacune deux droites. Il y a donc quatre droites représentées. Chacune des traces est espacée d'un premier espacement 51.

La seconde section linéaire, représentée en dessous de la première section, comprend deux traces linéaires formant chacune deux droites, chacune des traces étant espacée d'un second espacement 52.

La troisième section linéaire représentée en dessous de la seconde section comprend deux traces linéaires formant chacune deux droites, chacune des traces étant espacée d'un cinquième espacement 53.

La quatrième section linéaire représentée en dessous de la troisième section comprend deux traces linéaires formant chacune deux droites, chacune des traces étant espacée d'un quatrième espacement 54.

Ainsi, il est possible de configurer la mire 41 de telle manière que les sections linéaires disposées les unes sous les autres comprennent un espacement entre les deux traces linéaires croissant d'une section à une autre.

Typiquement, une première section comprend un espacement sensiblement proche de 100nm jusqu'à une dernière section dont l'espacement est de l'ordre de 2 µm.

Un troisième exemple permet de considérer une mire 42 formant un quadrillage de 9 carrés ou rectangles comprenant une pluralité d'agrégats uniformément répartis. La mire est préférentiellement gravée à une profondeur proche de 170 µm. Cette dernière profondeur est adaptée de façon optimale aux microscopes à fluorescence et permet donc une mise au point au plus près des conditions d'observation usuelles en microscopie.

La mire 42 permet une calibration des photomultiplicateurs et/ou du laser. En effet, chaque carré de la mire 42 comprend une intensité de fluorescence donnée, c'est-à-dire que l'éclairage d'un carré par une source lumineuse extérieure entraine une émission de lumière des agrégats fluorescents bien déterminé à une certaine luminosité. Pour chacun des carrés, les agrégats d'un même carré possèdent les mêmes caractéristiques. C'est-à-dire que l'irradiation de la lame pour former les agrégats a été faite avec le même nombre de pulsations et une intensité choisie de manière à obtenir une intensité de fluorescence donnée par unité de surface.

Chacun des carrés, dans l'exemple de la figure 4 comprend 16 agrégats fluorescents dont l'irradiation dans un même carré à permis d'homogénéiser les propriétés pour chacun des carrés. En conséquence, chaque carré est susceptible d'émettre une intensité fluorescente donnée après un éclairage adapté. Différentes configurations sont possibles et peuvent être réalisées quant au nombre de carrés, de leur agencement et du nombre d'agrégats par carré.

Un avantage de cette mire est d'être une référence invariable en fluorescence permettant la calibration et la comparaison des microscopes à fluorescence entre eux. Notamment grâce à la grande stabilité des agrégats formés dans la lame de calibration mais aussi par l'invariabilité du niveau de fluorescence émise par chacun des carrés qui permettent d'étalonner différentes valeurs. La source de lumière fluorescente étant comprise dans la lame, cette mire permet de s'affranchir de tous les inconvénients des méthodes de calibrations par éclairage et réflexion d'un faisceau lumineux sur la lame.

Dans un exemple chaque carré a une intensité croissante de fluorescence permettant de créer une échelle de valeurs références.

Un quatrième exemple de mire 43 est représenté sur la figure 4. La mire 43 représente des lignes verticales gravées dans la lame à différentes profondeurs selon les lignes. Cette mire 43 permet une calibration 3D donnant précisément la profondeur de champ d'un objectif de microscope. La précision sur la calibration de la mesure d'une optique en profondeur de champ est de l'ordre de quelques centaines de nanomètres.

Enfin, une cinquième mire 44 permet de calibrer la réponse temporelle des détecteurs par la mesure de la durée de vie de la fluorescence après excitation des agrégats et observation du temps d'arrivé sur le détecteur des photons émis par ces mêmes agrégats.. Cette mire permet de calibrer le système de mesure de la durée de vie de fluorescence. La durée de vie des agrégats est stable est n'est pas dégradée par photo blanchiment grâce au procédé d'enregistrent qui permet de former des agrégats stables dans un support de type verre.

Lorsque la durée de vie de fluorescence des agrégats est de l'ordre de quelques nanosecondes cela permet de calibrer les détecteurs des microscopes avec une précision équivalente en ce qui concerne leurs temps de réponse.

Un dernier exemple de mire 48 permet de calibrer le système de positionnement des portes échantillons du microscope.

Les différentes mires décrites permettent différents types de calibration des microscopes mais aussi de tout autre système optique tel que des détecteurs optiques ou des sources optiques.

## Revendications

1. Lame de calibration en trois dimensions pour système optique comprenant au moins un agrégat fluorescent stable dont l'intensité et le spectre permettent de définir les caractéristiques d'une mire de calibration permettant de contrôler au moins l'une des caractéristiques suivantes d'un système optique de mesure correspondant à des fonctions réponses d'un système optique :
• les niveaux d'intensité de fluorescence ;
• l'uniformité du champ de vue ;
• la réponse chromatique ;
• la fonction réponse temporelle à travers la calibration de la dynamique des capteurs.

2. Lame de calibration en trois dimensions selon la revendication 1 pour un système optique, le système optique étant un système parmi la liste suivante : microscope, détecteurs, sources lumineuses.

3. Lame de calibration en trois dimensions pour système optique selon la revendication 1, **caractérisé en ce que** la mire permet une calibration du système de positionnement de l'optique, du système optique.

4. Lame de calibration en trois dimensions pour système optique selon la revendication 1, **caractérisé en ce que** la mire permet une calibration de la résolution optique du système optique.

## Patentansprüche

1. Dreidimensionale Kalibrierungsklinge für ein optisches System, umfassend mindestens ein stabiles fluoreszierendes Aggregat, dessen Intensität und Spektrum erlauben, die Eigenschaften eines Kalibriermusters zu definieren, das es erlaubt, mindestens eine der folgenden, den Antwortfunktionen eines optischen Systems entsprechenden, Eigenschaften eines optischen Messsystems zu kontrollieren:
- die Intensitätsniveaus der Fluoreszenz;
- die Gleichförmigkeit des Sichtbereichs;
- die Farbempfindlichkeit;
- die zeitabhängige Antwortfunktion durch die Kalibrierung der Sensorendynamik.

2. Dreidimensionale Kalibrierungsklinge nach Anspruch 1 für ein optisches System, wobei das optische System ein System aus folgender Liste ist: Mikroskop, Sensoren, Lichtquellen.

3. Dreidimensionale Kalibrierungsklinge für ein optisches System nach Anspruch 1, **dadurch gekennzeichnet, dass** das Muster eine Kalibrierung des Positionierungssystems der Optik des optischen Systems erlaubt.

4. Dreidimensionale Kalibrierungsklinge für ein optisches System nach Anspruch 1, **dadurch gekennzeichnet, dass** das Muster eine Kalibrierung der optischen Auflösung des optischen Systems erlaubt.

## Claims

1. 3D calibration plate for an optical system including at least one stable fluorescent cluster, the intensity and the spectrum of which enable definition of the features of a calibration test chart for checking at least one of the following features of a measurement optical system corresponding to response functions of an optical system:
• the levels of fluorescence intensity;
• the uniformity of the field of view;
• the colour response;
• the time response function through the calibration of the dynamics of the sensors.

2. 3D calibration plate according to Claim 1 for an optical system, the optical system being a system from the following list: microscope, detectors, light sources.

3. 3D calibration plate for an optical system according to Claim 1, **characterized in that** the test chart enables calibration of the system for positioning the optical components of the optical system.

4. 3D calibration plate for an optical system according to Claim 1, **characterized in that** the test chart enables calibration of the optical resolution of the optical system.
